# EUROPEAN PATENT SPECIFICATION

(11) **EP 3 195 551 B1**
(45) Date of publication and mention of the grant of the patent: **17.04.2019**
(21) Application number: 14850102.6
(22) Date of filing: 11.08.2014
(51) Int. Cl.: H04L 29/06, G06F 21/51

(54) **METHOD AND SYSTEM FOR MANAGING FINE-GRAINED POLICIES FOR REQUIRING USER APPROVAL OF DEVICE MANAGEMENT OPERATIONS**
VERFAHREN UND SYSTEM ZUR VERWALTUNG VON ABGESTIMMTEN RICHTLINIEN ZUR ANFORDERUNG EINER BENUTZERGENEHMIGUNG VON VORRICHTUNGSVERWALTUNGSVORGÄNGEN
PROCÉDÉ ET SYSTÈME DE GESTION DE POLITIQUES À GRAIN FIN POUR IMPOSER L'APPROBATION PAR UN UTILISATEUR D'OPÉRATIONS DE GESTION DE DISPOSITIFS

(43) Date of publication of application: 26.07.2017
(73) Proprietor: Oracle International Corporation, Redwood Shores, CA 94065 (US)
(72) Inventor: VIOLLEAU, Thierry, F-78700 Conflans Sainte Honorine (Yvelines) (FR); VAN HAVER, Patrick, Redwood Shores, CA 94065 (US); EGIAZAROV, Tigran Igorevich, Redwood Shores, CA 94065 (US)
(74) Representative: D Young & Co LLP
(86) International application number: PCT/RU2014/000600
(87) International publication number: WO 2016/024876

(56) References cited:
- WO-A1-2009/102244
- WO-A1-2009/140393
- WO-A1-2011/103916
- WO-A1-2014/089474
- US-B1- 8 014 756

## Description

### BACKGROUND

When a server operates on a remote device, the server may be authorized to perform one or more operations on the remote device by an authorization token. The authorization token is generated by the server and transmitted to the remote device, and may also be used to authenticate the service provider that requests to perform an operation via the server on the remote device.

US 8014756 B1 discloses that a mobile authorization service may be implemented as a web-based service, hosted on an authorization service server, and may exchange messages with various computing devices of subscribers to the service, including mobile communication devices. The service may be implemented as a software application executing on the server, and may include a client portion executing on subscriber computer systems and/or mobile communication devices, or subscribers may interact with the service using a text messaging application or a web browsing application.

WO 2009/102244 A1 discloses a method of authorizing a request for presence information of a first client, which is received from a second client. The authorization procedure comprises at least on attribute, associated with preferences of the second client to the first client as an XML extension document.

WO 2009/140393 A1 discloses methods, systems, and apparatus, including medium encoded computer program products, for installing software include receiving a request to install a software product on a device and identifying the software product and the source of the software product based on the request. A message, which includes data identifying the software product and the source of the software product, is transmitted to a remote update device. An authorization message is received from the remote update device indicating whether the source of the software product is authorized to provide the software product. If the authorization message indicates that the source of the software product is authorized to provide the software product, the software product is automatically installed on the device.

### SUMMARY

The invention is defined in the independent claims. Preferred embodiments are defined in the dependent claims.

In general, in one aspect, the embodiments disclosed herein relate to a method for managing operations on a client, comprising receiving a first request from a first application service provider (ASP) for performing a first operation on the client, determining that the first requested operation requires user approval and is not pre-approved, based on the determination that the first requested operation requires user approval and is not pre-approved generating an extended authorization token comprising a user approval method, wherein the user approval method prompts the client to seek user approval prior to executing the requested operation, transmitting the extended authorization token to the client, receiving a user response to the user approval method, and executing the first requested operation on the client, when the received user response indicates approval of the first requested operation.

In general, in one aspect, the embodiments disclosed herein relate to a method for managing operations on a client, comprising receiving, by the client, an extended authorization token comprising a user approval method, displaying, on the client, the user approval method prompting a user using the client to accept or reject a request to perform an operation on the client prior to the requested operation being executed on the client, and responding to the user approval method, wherein when the user accepts the request to perform the operation, the operation is executed on the client.

In general, in one aspect, the embodiments disclosed herein relate to a server comprising a trusted authority configured to receive a request to perform an operation on a client from an application service provider (ASP), determine whether the requested operation is pre-approved, and a constraint generating engine configured to, when the requested operation requires user approval and is not pre-approved generate a user constraint comprising a user approval method requiring a user of the client to approve or reject the requested operation prior to execution of the requested operation on the client, the trusted authority being further configured to generate an extended authorization token comprising the user approval method, wherein the user approval method prompts the client to seek user approval prior to executing the requested operation, transmit the extended authorization token to the client, receive a user response to the user approval method, and execute the requested operation on the client, when the received user response indicates approval of the requested operation.

Other aspects will be apparent from the following description and the appended claims.

### BRIEF DESCRIPTION OF DRAWINGS

FIG. 1 shows a schematic diagrams in accordance with one or more embodiments disclosed herein.
Figs. 2A and 2B show an authorization token in accordance with one or more embodiments disclosed herein.
FIG. 3 shows a flowchart in accordance with one or more embodiments disclosed herein.
FIG. 4 shows a computer system in accordance with one or more embodiments disclosed herein.

### DETAILED DESCRIPTION

Specific embodiments will now be described in detail with reference to the accompanying figures. Like elements in the various figures are denoted by like reference numerals for consistency.

In the following detailed description of embodiments, numerous specific details are set forth in order to provide a more thorough understanding. However, it will be apparent to one of ordinary skill in the art that embodiments disclosed herein may be practiced without these specific details. In other instances, well-known features have not been described in detail to avoid unnecessarily complicating the description.

In general, one or more embodiments disclosed herein provide a method and system for managing, from a back-end server, different fine-grained policies by extending authorization tokens with specific conditions (constraints) that must be fulfilled before performing an operation on a client device. More specifically, embodiments relate to extending the authorization token with a user approval constraint requesting the on-device entity verifying the authorization token to prompt the user for approval before an operation is performed on the client device.

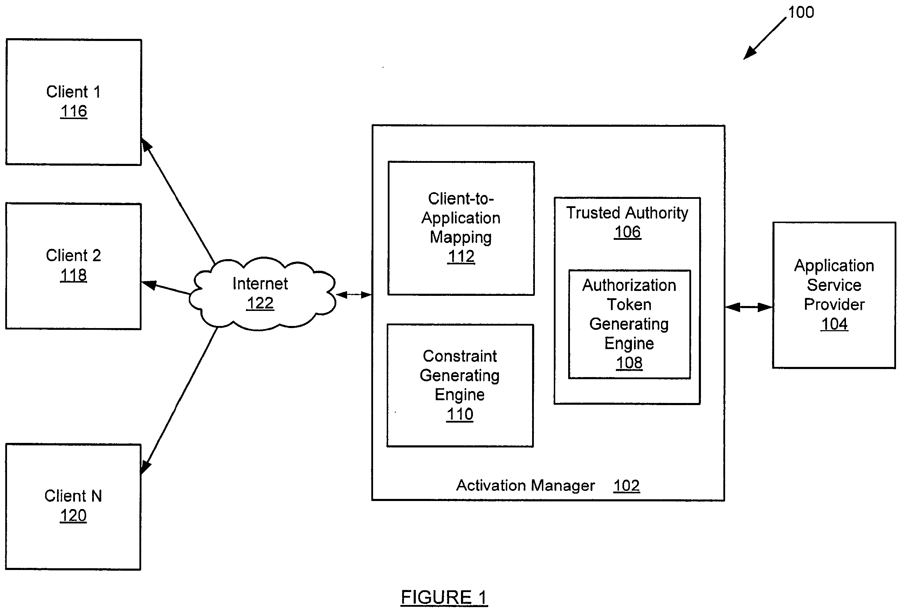

FIG. 1 shows a schematic diagram of a client/server topology in accordance with one or more embodiments. Specifically, FIG. 1 shows a system (100) including a back-end server (e.g., the activation manager 102) and multiple client devices (116, 118, 120) with which the activation manager (102) communicates based on input from an application service provider (104). Each of the aforementioned components of the system (100) are described below.

Each client (116, 118, 120) may be a portable electronic device such as a smart phone, tablet, gaming device, or any other suitable electronic device having internet capability. Throughout this description, the terms client and client device may be used interchangeably. In one or more embodiments, each client (116, 118, 120) may be a trusted execution environment (TEE) client. More specifically, TEE software may be installed by the client device manufacturer such that the TEE software automatically executes on the client (116, 118, 120) for certain applications which require use of sensitive data. Content providers of secure applications using sensitive data must comply with the TEE platform and structural requirements.

In one or more embodiments, TEE is a secure area in the client device (e.g., a smart phone, tablet, or any other suitable electronic device) and ensures that sensitive data is stored, processed and protected in a trusted environment. More specifically, the client device operating system OS) may be partitioned into a rich execution environment (REE) and the TEE. The TEE is an isolated execution environment with its own set of hardware and software components that runs in parallel with but separate from the REE, providing security services to the Rich OS environment. REE is an environment that is provided and governed by the Rich OS, which is outside of the TEE. The Rich OS is a more robust OS, developed with functionality and performance as key goals, rather than security, and thus, runs with lower security boundaries. From the perspective of the TEE, the REE and applications running on the REE are considered un-trusted. In constrast, the TEE executes a trusted OS, which is designed to enable the TEE using security based design techniques.

In one or more embodiments, TEE is part of the system on-chip (SoC) in a typical chipset architecture, and may be made up of a separate on-chip security subsystem within the SoC, or may operate as a portion of each of the SoC components (*i.e*., the RAM, ROM, Crypto Accelerators, Processing Core(s), peripherals, etc.). The primary purpose of the TEE is to protect its assets from the REE through hardware mechanisms which are beyond the REE's control. For example, the TEE provides trusted storage of data and keys, where the storage of data is bound to the device so that no unauthorized internal or external attacker may access, copy, or modify the data contained within the TEE.

In terms of software architecture, the TEE exposes sets of application programming interfaces (APIs) to enable communication from the REE and others to enable trusted application software functionality within the TEE. More specifically, the trusted OS is the hosting code that provides an internal API to trusted applications which run on top of the trusted OS, and a proprietary method to enable the client device API software interface from other execution environments. The TEE architecture enables a level of security sufficient for a significant number of applications upon which the application service provider (104) may wish to perform an operation. In one or more embodiments, the TEE is configured to perform sensitive operations subject to security protection on the client device, such as, for example, banking operations, payment operations, etc. The TEE architecture is defined in the document entitled "GlobalPlatform Device Technology TEE System Architecture" version 1.0 dated December 2011. The communication between applications running in a rich operating environment and the applications residing in the Trusted Execution Environment (TEE) is defined in the document entitled "GlobalPlatform Device Technology TEE Client API Specification" version 1.0 dated July 2010. The invention is not limited to a particular version of TEE architecture or a particular version of the Client API Specification.

Returning to the description of FIG. 1, each client (116, 128, 120) may be operated by a user (not shown). The user may be any person or entity using the client device. The client (116, 118, 120) may be owned by the user, or in one or more embodiments of the user, may be owned by a company, university, government agency or other entity that permits the use of the client by the user, for example. In one or more embodiments, the user is configured to receive requests to perform operations on the client (116, 128, 120) where such requires require user approval. The user is also configured to respond to such requests for approval before an operation may be performed on the client device (116, 128, 120).

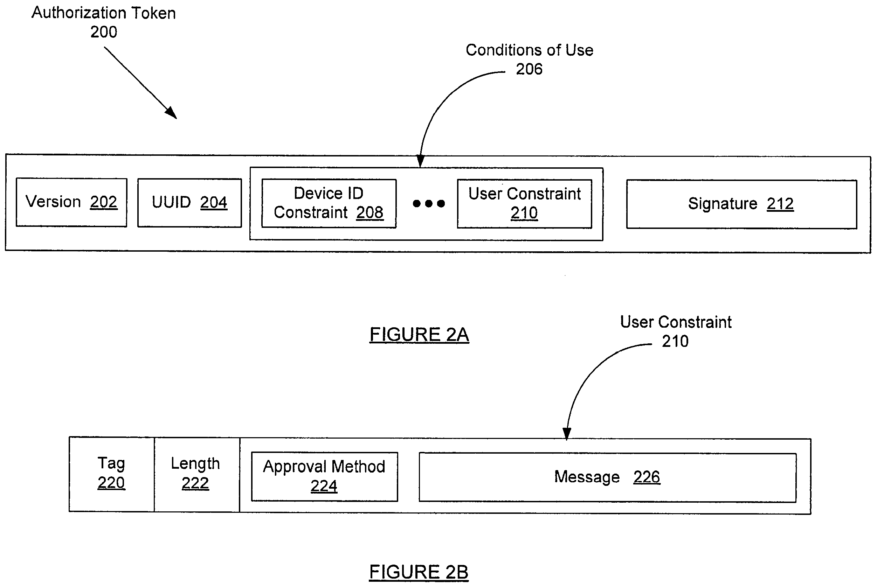

In one or more embodiments, the activation manager (102) is a server configured to manage different fine-grained policies for the management of remote client devices by generating and transmitting authorization tokens. More specifically, the activation manager (102) is configured to extend authorization tokens with specific conditions/constraints that must be fulfilled before performing an operation, requested by the application service provider (ASP) (104), on the client (116, 118, 120). The terms activation manager and server may be used interchangeably herein. In one or more embodiments, the activation manager (102) includes a trusted authority (106), a constraint generating engine (110) and a client-to-application mapping (112). The trusted authority (106) is a server side authority configured to perform remote operations such as installing/deploying of applications, upgrading of software on the client, deinstalling applications, etc., on the client (116, 128, 120). The trusted authority (106) communicates with each client (116, 128, 120) via the internet (122), any other suitable network, or using any other form of communication among components on one or more devices. The authorization token generating engine (108) is logic within the trusted authority capable of generating an authorization token in accordance with one or more embodiments. The structure of an authorization token as generated by the authorization token generating engine (108) is described in Figs. 2A-2B below.

The constraint generating engine (110) of the activation manager (102) is configured to collect information for generation of specific use conditions of the authorization token. Specifically, in one or more embodiments, the constraint generating engine (110) may collect information on the environment in which the client device is located, the owner of the client device, the origin of the request to perform a certain operation on the client device, the provider of a particular application deployed or to be deployed on the client device, whether an application targeted for an operation is essential to the platform or its security, a duration since the last user approval, a number of user approved requests, the scripting of several operation which may be grouped together so as to require a single user approval, or any other suitable constraint information or combination thereof.

The constraint generating engine (110) may obtain the aforementioned types of information from the ASP (104) or from the policies associated with the environment (e.g., physical location) of the client (116, 118, 120). For example, in one or more embodiments, when the client (116, 118, 120) is a company device located on site, constraint information may be obtained by the ingrained policies associated with the company. Company policies may indicate, for example, which operations are mandated for security reasons. In another example, when the client (116, 118, 120) is a user's personal electronic device in a bring-your-own-device (BYOD) setting, policies associated with operations that can be performed on the client (116, 118, 120) device may differ than when the client (116, 118, 120) is owned by the company. Using the aforementioned policies and types of information, the constraint generating engine (110) generates the use conditions that are included with the authorization token generated by the authorization token generating engine (108).

The client-to-application mapping (112) is configured to store a data structure such as a table, a list, etc., mapping each client (116, 118, 120) to the applications that are deployed on the client. More specifically, in one or more embodiments, the client-to-application mapping (112) is further configured to store an indication of whether a requested operation has been pre-approved, such that the trusted authority (106) may determine when obtaining user approval for a particular operation is not necessary. For example, each time the user using the client approves or rejects a request to perform an operation associated with a particular application on the client (116, 118, 120), the user's response may be stored in the client-to-application mapping (112). In one or more embodiments, other indirect user actions may also be stored in the client-to-application mapping (112), which may later be used by the trusted authority (106) to determine whether an operation is pre-approved. Such indirect actions may include, for example, acceptance of a terms of use or license agreement for a particular category of applications, and management operations that are approved by a company that owns the client device and/or an environment into which the client device is brought. The client-to-application mapping (112) may also store a list of the applications installed on the client device, a number of times a particular type of operation has been approved by the user, and a duration since the last time the user approved or rejected a particular type of operation.

In one or more embodiments, the ASP (104) is configured to request to perform an operation on the client device through the activation manager (102). The ASP (104) may be any application content provider that is responsible for managing the applications on the client device. In one or more embodiments, the ASP (104) may be a content provider for secure applications, such as, for example, a banking service provider, a payment systems service provider, etc. The ASP (104) may also be the company or entity that owns the client device, when the client device is not a personal device of the user operating the client device. In one or more embodiments, the ASP (104) has a trusted relationship with the trusted authority (106) of the activation manager (102). That is, the ASP (104) is pre-authenticated with the activation manager (102), thereby allowing the activation manager (102) to trust that the content provided by the ASP (104) is secure content. In one or more embodiments, the ASP (104) may request to perform any type of device management operation on the client. For example, the ASP (104) may request to install/deploy an application in the TEE environment of the client device. Alternatively, the ASP (104) may request to perform a security patch update to an essential application, de-install an application from the client device, or any other suitable management operation associated with applications executing on the client device.

The invention is not limited to the system shown in FIG. 1.

FIG. 2A and 2B show an authorization token in accordance with embodiments described herein. Specifically, FIG. 2A shows an authorization token (200) with an appended user constraint (210) in accordance with embodiments. The authorization token (200) is a data structure that is signed at the end with a cryptographic signature, which allows the client device to verify both the identity of the server performing the remote operation and the integrity of the operation message before processing it. The authorization token (200) stores a version number (202) and a universally unique identifier (UUID) (204) that uniquely identifying the Security Domain (SD) that owns the key able to verify the authorization token (200). In one or more embodiments, when the client is a TEE client (*i.e*., a client device that has installed and executes TEE), the UUID (204) may identify the SD sub-entity within the TEE having the keys to decrypt the cryptographically signed authorization token and verify the authorization token signature (212). Those skilled in the art will appreciate that several SDs may exist in a TEE.

In one or more embodiments, the authorization token (200) is also associated with various conditions of use (206). The conditions of use (206) may specify one or more constraints that restrict the applicability of the authorization token (200) and must be satisfied in order for the requested operation to be performed. For example, the device ID constraint (208) specifies the particular client device to which the authorization token is being transmitted. Another constraint may be an operation constraint (not shown) which specifies what type of operation is to be performed on the client device. In one or more embodiments, a user constraint (210) is appended to the authorization token to define whether a user approval method is required before the operation requested by the ASP is performed on the client device. That is, the inclusion of the user constraint (210) in the authorization token enables the activation manager to signal to the receiving software on the client device that a user approval method is required before the operation may be carried out on the client device. By combining the user constraint (210) and the authorization token (200) into one transmission, embodiments provide a dynamic user constraint (210) that may be tailored for each operation required by an ASP.

As mentioned above, the authorization token (200) may also be associated with a cryptographic key in the form of a digital signature (212) used to secure the authorization token. The digital signature may be generated using a private key known only to the person authorized to make the signature. The authorization token (200) may allow secure on-board generation and storage of private keys enabling secure digital signatures, in which case the authorization token (200) may be used for user authentication, as the private key also serves as a proof for the signer's identity. The digital signature (212) is verified on the receiving end by software executing on the client device. The user constraint (210) specifies a user approval method as part of the authorization token (200).

FIG. 2B shows the construction of a user constraint (210) in accordance with embodiments. The user constraint (210) may include a tag (220), a length (222), a user approval method (224) and an optional message (226). Specifically, the tag (220) is a constant value that uniquely identifies the user constraint among other constraints that may be included within the use conditions of an authorization token. When the tag (220) is present, the user of the client is prompted with a user approval method (224) for approving or rejecting the requested operation before proceeding with the operations on the client device. The length (222) field specifies the length of the user constraint (210), including any message (226) that may optionally be included as part of the user constraint (210). In one or more embodiments, the user approval method (224) identifies the mechanism presented to the user for accepting or rejecting the requested operation. For example, a user approval method (224) may be a message displayed to the user with 'yes' and 'no' or 'accept' and 'reject' buttons, an authentication mechanism requiring the user to enter a pin code or password to accept the request for performing the operation, a biometric data prompt (e.g., to obtain the user's fingerprint or retina scan), or any other suitable approval method that may be employed to capture the user's feedback regarding the request to perform the operation. In one or more embodiments, the selected approval method appended in the authorization token may be specified by the ASP requesting to perform the operation on the client. Alternatively, the server may determine the type of approval method to select for a particular operation based on stored policies for specific types of operations.

In one or more embodiments, the message (226) portion of the user constraint (210) is an optional, customizable message with additional information that may be displayed/presented to the user to aid the user in making the decision of whether to accept or reject the requested operation. For example, if an ASP requests to de-install an application from the client, the ASP may specify to the server to display message indicating why the designated application is being de-installed. The customizable message (226) may specify, in one or more embodiments, target application(s) for the operation and/or a name of the ASP requesting to perform the operation. As another example, the user may be prompted with the standard message "Application X is being installed on your device." An additional message explaining the terms and conditions of the license agreement to which the user must agree before the application is installed may also be displayed to the user. In one or more embodiments, the information included in the appended user message is for purposes of aiding the user in determine whether to accept or reject the requested operation via the user approval method.

The invention is not limited to the authentication token structure shown in FIGS. 2A-2B.

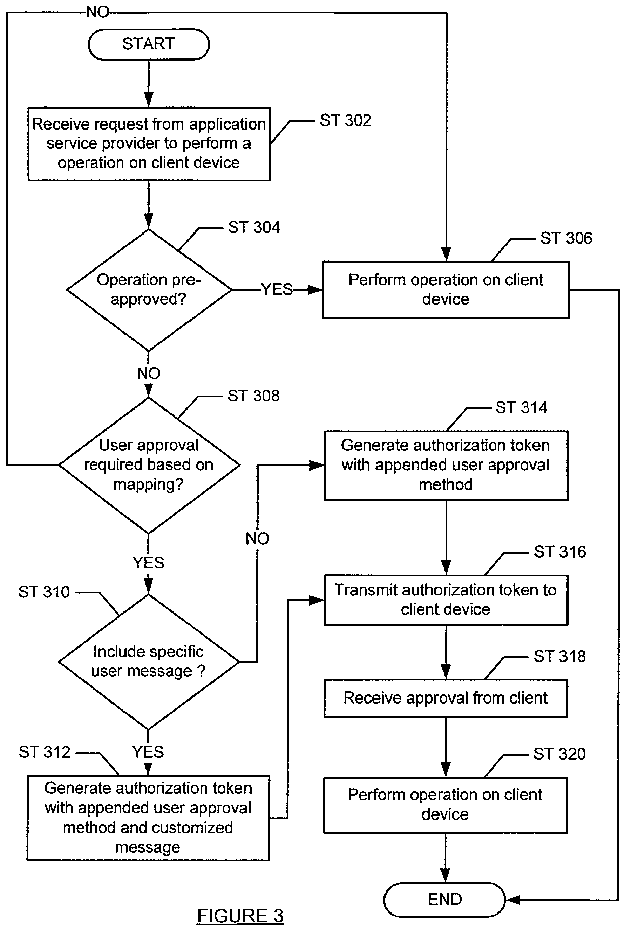

FIG. 3 shows a flowchart for in accordance with one or more embodiments. More specifically, FIG. 3 describes the process that is performed by the server (or activation manager) to implement embodiments. While the various steps in these flowcharts are presented and described sequentially, one of ordinary skill will appreciate that some or all of the steps may be executed in different orders, may be combined or omitted, and some or all of the steps may be executed in parallel. Furthermore, the steps may be performed actively or passively. By way of an example, determination steps may be performed by checking stored data to test whether the data is consistent with the tested condition in accordance with one or more embodiments.

When a back-end server performs remote operations on a client device, the server provides an authorization token with a cryptographic signature allowing the device to verify both the identity of the server requesting the operation and the integrity of the operation message before processing it. In this process, there may be cases where the end-user approval is required. For example, before installing an application, user approval may be required in order to check that the user accepts the installation of that particular application, to prevent from executing unwanted operations triggered by malicious applications. There may also be other cases where the end-user approval is not required. For example, when a back-end server is pushing content to upgrade software of a company-owned device, or when the operation is essential to the device or to its security and must not be rejected by the end user. The process described in FIG. 3 relates to extending the authorization token to include the user approval method when such user approval is required.

In Step 302, a request is received by the server from an ASP. Specifically, the ASP requests to perform an operation on the client device via the server. The operation may include, but is not limited to, deploying/installing an application on the client device, upgrading software installed on the client device, updating an application, de-installing an application from the client device, pushing data onto the client device, or any other suitable operation that may be performed on the client device by an ASP. As a specific example, a company that owns the client device may wish to install software that prevents the user from downloading content from designated websites onto the client device. In this case, the company owning the client device is the ASP, and the operation to be performed is installation of software for security purposes.

When a request to perform an operation is received by the server (*e.g*., 102 in FIG. 1), the server first determines whether the operation is pre-approved (Step 304). This determination may be made in one of two ways. In one or more embodiments, the ASP may indicate in the request for performing the operation that the operation requires no user approval. For example, when the operation is a security operation that must be performed, user approval may be bypassed on request of the ASP. In another embodiment, the server (and more specifically, the constraint generating engine of the server) may check the client-application mapping stored on the server to determine whether the operation has already been approved. In one or more embodiments, when the operation is pre-approved, the operation is performed on the client without user approval being required (ST 306). More specifically, for a pre-approved operation, a default approval policy is used, which may or may not prompt the user for approval before the operation is performed, depending on the platform level configuration of the client. In one or more embodiments, pre-approved operations may include, for example, deploying application(s) on the client in the context of a license that has already been approved by the user. More specifically, if a user has already accepted particular terms of agreement or a license agreement previously, this information is stored in the client-application mapping on the server. The constraint generating engine may find that the operation requested by the ASP falls within such a previously accepted license agreement, and thus, would mark the requested operation as pre-approved. Other types of pre-approved operations may include deploying security patches, or performing any operation on the client for security reasons.

When the operation is not pre-approved, the server checks the client-to-application mapping stored on the server to determine whether any other information is stored that would allow the server to bypass user approval (Step 308). For example, if the user has previously approved the operation within a certain time period (e.g., if the last time the user was asked to approve the same operation or the same type of operation was less than 30 days ago), then user approval may be bypassed. Such a policy based on parameters such as duration since last user approval may also be stored in the client-to-application mapping or elsewhere in the server. Other parameters that may be considered by the server include, for example, the owner of the client device, the location of the client device, etc. For example, if the client device is connected to a company intranet, and/or the owner of the client device is the company, the operation may be deemed as not requiring any user approval. When the client-to-application mapping indicates that the user does not need to approve the operation based on one or more parameters collected and stored by the server, the process proceeds to Step 306 and the operation is performed on the client without any user approval method required. That is, an authorization token is generated by the server, with a cryptographic signature to verify the identity of the server to the client, where the authorization token overrides any default policy indicating that client approval is required.

If there are no indications that user approval may or should be bypassed, then user approval is required before performing the operation on the client device (Step 308). At this stage, a second determination is made as to whether a specific customized message to the user should be included with the user approval constraint (Step 310). In one or more embodiments, the customized message may provide details of the operation being performed to aid the user in making the determination as to whether to approve or reject the requested operation. Alternatively, the customized message may include, for example, the name of the ASP requesting to perform the operation so that the user is made aware of which entity is performing the operation on the client device. In one or more embodiments, the details of the message to the user may be provided by the ASP. In one or more embodiments, a policy may indicate when the server should provide certain information (e.g., the name of the entity requesting the operation to be performed on the client) to the user. For example, if the user is using a company client device, the company may request that a particular operation be performed on the device. In this case, the name of the company may be provided to the user as part of the customized message accompanying the request for approval. Those of ordinary skill in the art would appreciate that the customized user message may include any information suitable for aiding the user in accepting or rejecting the required operation.

When no specific message is required to accompany the user approval method, this indicates to the server to append only a user constraint to the authorization token, for prompting the user to either approve or reject the request to perform an operation on the client device (Step 314). More specifically, the authorization token generating engine of the server generates an authorization token with an appended user approval method. The user approval method may be, for example, 'accept'/ 'reject' buttons, prompting the user to enter a pin code or a password, prompting the user for biometric data (e.g., a fingerprint), or any other suitable user approval method that requires action on the part of the user using the client device to either accept or reject the request to perform the operation on the client. When the ASP or server determines that a message should accompany the user approval method, the server generates an authorization token with an appended user approval method and the customized message to the user (Step 312). Those skilled in the art would appreciate that the customized message may appear on the client device before the approval method is displayed, and/or concurrently with the user approval method. In this context, concurrently may correspond to scenarios in which the customized message is displayed during time period TP1 and the result of executing the user approval method (e.g., displaying 'accept'/ 'reject' buttons, prompting the user to enter a pin code or a password, prompting the user for biometric data, etc.) is displayed during time period TP2, where there exists at least some overlap between TP1 and TP2.

Once the authorization token is generated by the server, either with or without a customized message to the user, the authorization token including the appended user constraint (as part of the conditions of use) is transmitted to the client device (Step 316). In one or more embodiments, when the client is a TEE client, the authorization token with appended user constraint is received by the TEE software installed on the client device. The TEE software includes capability to decrypt the encrypted signature of the authorization token and verifying the token's authenticity. For example, one or more decryption keys may be stored in the TEE of the client device. When the client is not a TEE client, the client device operating system may be configured to decrypt the encrypted signature of the authorization token. In either case, the user of the client device receives the user approval method via the user interface executing on the client device, and the message if one is generated with the authorization token, and responds accordingly by reading the message and either accepting or rejecting the request to perform the operation on the client. When the user approves the request to perform the operation (Step 318), the operation is performed on the device (ST 320). The user response is received by the server and is recorded by the server in the client-to-application mapping such that the data collected may be used in future determination as to whether user approval is required for a particular request from an ASP.

The following examples illustrate the process of generating and transmitting an extended authorization token in accordance with one or more embodiments. Those skilled in the art will appreciate that the invention is not limited to the examples described below.

Consider the scenario where a user bring his/her own device to employment premises of a corporation or company for which the user works. The client device may have applications installed that are for work purposes, i.e., where the service provider of those applications is the corporation itself. The corporation may, in one or more embodiments, have specific policies on updating certain applications that are installed on the device for purposes of security, and policies on what types of applications may be installed while the device is connected to the corporation's intranet, for example. In this scenario, suppose that the corporation wishes to perform an update to an application executing on the client device, mandated for security reasons. In this case, the operation may be a pre-approved operation, because the operation is requested by the corporation and the client device is connected to the corporation's intranet. The authorization token is generated by the back-end server, transmitted to the client device, and the operation is performed without any user constraint required.

In a different scenario, suppose that the update to the application is not mandated for security reasons, but the corporation remains the ASP that requests the operation. In this case, the user may be prompted to approve or disapprove the requested operation. That is, an extended authorization token is generated with an appended user approval method before being transmitting to the client device. To help the user make the decision on whether to accept or reject the requested operation, a specific user message identifying the corporation as the requestor of the operation may be displayed to the user. More specifically, the extended authorization token includes the specific user message which is displayed to the user prior to performing the remote operation. In this case, the user may see that his/her employer desires to perform a remote operation on the client device, and lean toward accepting the requested.

In one or more embodiments, when the client device described in the above example is a TEE-enabled device, the interaction with the end user from the TEE when a user approval constraint is part of the authorization token is performed through a Trusted User Interface (UI). The Trusted UI prevents any malicious applications in the REE from interfering with the user approval or masquerading as the User approval UI. The Trusted UI presents itself in a visually different manner than the UI that is seen by the user when the client is not TEE-enabled.

As another example, in one or more embodiments, there may be a situation in which the user is not attending to his/her client device. In this case, the client device may receive the request to perform management operations with one or more user approval constraints, but the user is not attending to the device. In one or more embodiments, the user approval mechanism may be setup with a timeout, so that when the user does not answer the user approval prompt within a limited period of time, the operation may time out. In this case, an appropriate error message may be returned to the back-end server so that the server may differentiate between the user rejecting the operation and the user not attending the client device. If the operation timed out due to the user not responding to the user approval method, the server may retry the operation at a later time. Alternatively, when the user rejects the operation using the user approval method, this information may be noted in the mapping stored on the server and the operation may be permanently cancelled.

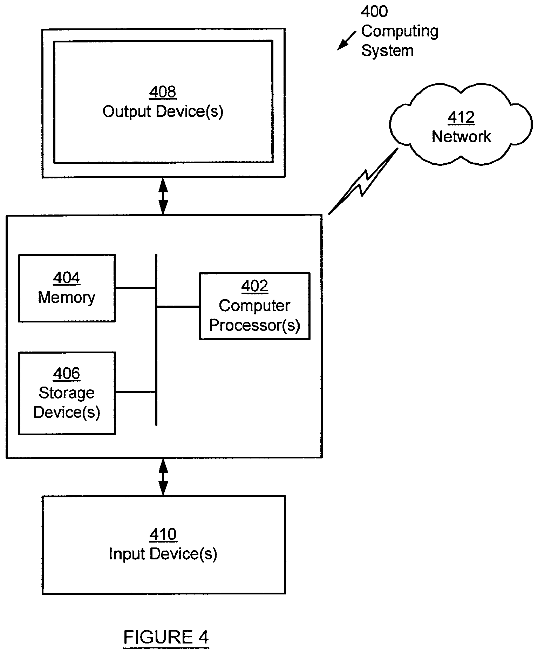

One or more embodiments disclosed herein may be implemented on virtually any type of computing system regardless of the platform being used. Specifically, the activation manager/server (102) and each client described in FIG. 1 may be implemented on any type of computing system. For example, the computing system may be one or more mobile devices (*e.g*., laptop computer, smart phone, personal digital assistant, tablet computer, or other mobile device), desktop computers, servers, blades in a server chassis, or any other type of computing device or devices that includes at least the minimum processing power, memory, and input and output device(s) to perform one or more embodiments. For example, as shown in FIG. 4, the computing system (400) may include one or more computer processor(s) (402), associated memory (404) (*e.g*., random access memory (RAM), cache memory, flash memory, *etc.*), one or more storage device(s) (406) (*e.g*., a hard disk, an optical drive such as a compact disk (CD) drive or digital versatile disk (DVD) drive, a flash memory stick, *etc.*), and numerous other elements and functionalities. The computer processor(s) (402) may be an integrated circuit for processing instructions. For example, the computer processor(s) may be one or more cores, or micro-cores of a processor. The computing system (400) may also include one or more input device(s) (410), such as a touchscreen, keyboard, mouse, microphone, touchpad, electronic pen, or any other type of input device. Further, the computing system (400) may include one or more output device(s) (408), such as a screen (*e.g*., a liquid crystal display (LCD), a plasma display, touchscreen, cathode ray tube (CRT) monitor, projector, or other display device), a printer, external storage, or any other output device. One or more of the output device(s) may be the same or different from the input device. The computing system (400) may be connected to a network (412) (*e.g*., a local area network (LAN), a wide area network (WAN) such as the Internet, mobile network, or any other type of network) via a network interface connection (not shown). The input and output device(s) may be locally or remotely (*e.g*., via the network (412)) connected to the computer processor(s) (402), memory (404), and storage device(s) (406). Many different types of computing systems exist, and the aforementioned input and output device(s) may take other forms.

Software instructions in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that when executed by a processor(s), is configured to perform embodiments.

Further, one or more elements of the aforementioned computing system (400) may be located at a remote location and connected to the other elements over a network (412). Further, embodiments may be implemented on a distributed system having a plurality of nodes, where each portion may be located on a different node within the distributed system. In one embodiment, the node corresponds to a distinct computing device. Alternatively, the node may correspond to a computer processor with associated physical memory. The node may alternatively correspond to a computer processor or micro-core of a computer processor with shared memory and/or resources.

One or more embodiments disclosed herein may enable the implementation of different user approval policies based on, for example, the environment of the client device. For example, bring-your-own-device environment policies may different from company-owned device policies and personal-usage device policies. In addition, the policy may depend on the ASP. For example, free, advertisement-sponsored applications and paid applications may not be subjected to the same user approval policies. Also, applications essential to a client or its security may require bypassing user approval policies. By extending the authorization token with an additional constraint which specifies the user approval method and an optional customized message, embodiments disclosed herein provide a robust, dynamic method managing remote operations on a client device via user approval policies.

While the invention has been described with respect to a limited number of embodiments, those skilled in the art, having benefit of this disclosure, will appreciate that other embodiments can be devised which do not depart from the scope of embodiments as disclosed herein. Accordingly, the scope of embodiments disclosed herein should be limited only by the attached claims.

## Claims

1. A method for managing operations on a client (116) by an activation manager (102) on a backend server, the method comprising:
receiving (302), by the activation manager, a request from an application service provider, ASP, (102) for performing an operation on the client, wherein the requested operation is a device management operation selected from a group consisting of: deploying an application, personalizing/configuring an application, updating an application, uninstalling an application, and deploying a security patch on the client;
determining (304), by the activation manager, whether the requested operation is not pre-approved and so requires user approval;
based on the determination that the requested operation is not pre-approved and so requires user approval:
generating (314), by the activation manager, an extended authorization token (200) comprising a user constraint (210) which includes a user approval method (224), wherein the user constraint signals to the client that the user approval method is required before the requested operation may be carried out on the client;
transmitting (316) the extended authorization token from the activation manager to the client;
displaying, by the client, the user approval method;
receiving, by the client, a user response to the user approval method; and
executing by the client, the requested operation on the client, either when the received user response indicates approval of the requested operation or when the requested operation is pre-approved.

2. The method of claim 1, wherein generating the extended authorization token further comprises:
appending a customized message to the extended authorization token, wherein the customized message provides additional information used by the user to determine whether to accept or reject the requested operation via the user approval method.

3. The method of claim 2, wherein the additional information comprises at least one selected from the group consisting of: the name of the ASP requesting the operation and a target application of the operation.

4. The method of claim 1, wherein the extended authorization token comprises an encrypted digital signature.

5. The method of claim 1, wherein the user approval method is configurable.

6. The method of claim 5, wherein configuration of the user approval method comprises at least one selected from the group consisting of: requesting biometric data from the user, requesting a user password, displaying a user message having 'accept' and 'reject' options for user selection, and a two-factor authentication method.

7. The method of claim 1, wherein an operation is pre-approved when the operation is mandated by the ASP, the operation has been previously approved by the user, and/or the operation is essential to security of the client.

8. The method of claim 1, further comprising:
displaying, on the client, the user approval method prompting the user to accept or reject a request to perform the requested operation on the client prior to the requested operation being executed on the client.

9. The method of claim 8, wherein the requested operation is performed on a target application on the client, and wherein the target application executes in a trusted execution environment, TEE, on the client.

10. The method of claim 9, wherein the TEE receives the extended authorization token and decrypts an encrypted digital signature.

11. The method of claim 8, wherein displaying the user approval method further comprises:
displaying a customized message with additional information used by the user to determine whether to accept or reject the requested operation via the user approval method.

12. Apparatus comprising a server and a client, the server comprising: a trusted authority (108) configured to:
receive a request to perform an operation on a client from an application service provider, ASP, wherein the requested operation is a device management operation selected from the group consisting of: deploying an application, updating an application, uninstalling an application, deploying a security patch on the client;
determine whether the requested operation is not pre-approved, and so requires user approval; and
a constraint generating engine (110) configured to, when the requested operation requires user approval and is not pre-approved:
generate a user constraint which includes a user approval method, wherein the user constraint signals to the client for a user to approve or reject the requested operation prior to execution of the requested operation on the client;
the trusted authority being further configured to:
generate an extended authorization token comprising the user constraint which includes the user approval method, wherein the user approval method prompts the client to seek user approval before the requested operation may be carried out on the client; and
transmit the extended authorization token to the client;
the client being configured to:
display the user approval method;
receive a user response to the user approval method; and
execute the requested operation on the client, either when the received user response indicates approval of the requested operation or when the requested operation is pre-approved.

13. The apparatus of claim 12, wherein the server further comprises:
a client-to-application mapping (112) configured to store a plurality of applications installed on the client, a number of times the user has approved a particular type of operation, and a duration since the user last approved a particular operation.

14. The apparatus of claim 12, the constraint generating engine being further configured to, when the requested operation is not pre-approved:
extend the authorization token by appending a customized message to the authorization token, wherein the customized message provides additional information used by the user to determine whether to accept or reject the requested operation via the user approval method.

15. The apparatus of claim 12, wherein the user approval method is configurable, and wherein a configuration of the user approval method is one selected from the group consisting of: requesting biometric data from the user, requesting a user password, displaying a user message having 'accept' and 'reject' options for user selection, and a two-factor authentication method.

## Patentansprüche

1. Verfahren zum Verwalten von Vorgängen auf einem Client (116) durch einen Aktivierungsmanager (102) auf einem Backend-Server, wobei das Verfahren Folgendes umfasst:
Empfangen (302) einer Anforderung eines auf dem Client durchzuführenden Vorgangs von einem Application-Service-Provider, ASP, (102) durch den Aktivierungsmanager, wobei der angeforderte Vorgang ein Geräteverwaltungsvorgang ist, der aus einer Gruppe ausgewählt wird, die aus Folgendem besteht: Bereitstellen einer Anwendung, Personalisieren/Konfigurieren einer Anwendung, Aktualisieren einer Anwendung, Deinstallieren einer Anwendung und Bereitstellen eines Sicherheitspatch auf dem Client;
Bestimmen (304) durch den Aktivierungsmanager, ob der angeforderte Vorgang nicht vorab bewilligt wurde und daher eine Benutzerbewilligung erfordert;
basierend auf der Bestimmung, dass der angeforderte Vorgang nicht vorab bewilligt wurde und daher eine Benutzerbewilligung erfordert:
Generieren (314) eines erweiterten Berechtigungstokens (200), das eine Benutzereinschränkung (210) umfasst, die ein Benutzerbewilligungsverfahren (224) enthält, durch den Aktivierungsmanager, wobei die Benutzereinschränkung dem Client signalisiert, dass das Benutzerbewilligungsverfahren erforderlich ist, bevor der angeforderte Vorgang auf dem Client ausgeführt werden darf;
Übertragen (316) des erweiterten Berechtigungstokens vom Aktivierungsmanager an den Client;
Anzeigen des Benutzerbewilligungsverfahrens durch den Client;
Empfangen einer Benutzerantwort auf das Benutzerbewilligungsverfahren durch den Client; und
Laufenlassen des angeforderten Vorgangs auf dem Client durch den Client, entweder wenn die empfangene Benutzerantwort eine Bewilligung des angeforderten Vorgangs angibt oder wenn der angeforderte Vorgang vorab bewilligt wurde.

2. Verfahren nach Anspruch 1, wobei das Generieren des erweiterten Berechtigungstokens ferner Folgendes umfasst:
Anhängen einer angepassten Nachricht an das erweiterte Berechtigungstoken, wobei die angepasste Nachricht zusätzliche Informationen liefert, die vom Benutzer genutzt werden, um zu bestimmen, ob der angeforderte Vorgang über das Benutzerbewilligungsverfahren anzunehmen oder abzulehnen ist.

3. Verfahren nach Anspruch 2, wobei die zusätzlichen Informationen mindestens eines der folgenden Elemente umfassen, die aus der Gruppe ausgewählt werden, die aus Folgendem besteht: dem Namen des den Vorgang anfordernden ASP und einer Zielanwendung des Vorgangs.

4. Verfahren nach Anspruch 1, wobei das erweiterte Berechtigungstoken eine verschlüsselte digitale Signatur umfasst.

5. Verfahren nach Anspruch 1, wobei das Benutzerbewilligungsverfahren konfigurierbar ist.

6. Verfahren nach Anspruch 5, wobei die Konfiguration des Benutzerbewilligungsverfahrens mindestens ein Element umfasst, das aus der Gruppe ausgewählt wird, die aus Folgendem besteht: Anfordern biometrischer Daten vom Benutzer, Anfordern eines Benutzerpassworts, Anzeigen einer Benutzernachricht mit den Optionen 'Annehmen' und 'Ablehnen' zur Benutzerauswahl und einem Zwei-Faktor-Authentifizierungsverfahren.

7. Verfahren nach Anspruch 1, wobei ein Vorgang vorab bewilligt wurde, wenn der Vorgang durch den ASP vorgegeben wird, der Vorgang vorher vom Benutzer bewilligt wurde und/oder der Vorgang unbedingt notwendig für die Sicherheit des Clients ist.

8. Verfahren nach Anspruch 1, das ferner Folgendes umfasst:
Anzeigen des Benutzerbewilligungsverfahrens, das den Benutzer zum Annehmen oder Ablehnen einer Anforderung, dass der angeforderte Vorgang auf dem Client durchzuführen ist, bevor der angeforderte Vorgang auf dem Client laufen gelassen wird, auf dem Client.

9. Verfahren nach Anspruch 8, wobei der angeforderte Vorgang in einer Zielanwendung auf dem Client durchgeführt wird und wobei die Zielanwendung in einer Trusted Execution Environment, TEE, auf dem Client läuft.

10. Verfahren nach Anspruch 9, wobei die TEE das erweiterte Berechtigungstoken empfängt und eine verschlüsselte digitale Signatur entschlüsselt.

11. Verfahren nach Anspruch 8, wobei das Anzeigen des Benutzerbewilligungsverfahrens ferner Folgendes umfasst:
Anzeigen einer angepassten Nachricht mit zusätzlichen Informationen, die vom Benutzer genutzt werden, um zu bestimmen, ob der angeforderte Vorgang über das Benutzerbewilligungsverfahren anzunehmen oder abzulehnen ist.

12. Vorrichtung, die einen Server und einen Client umfasst, wobei der Server Folgendes umfasst:
eine Trusted Authority (108), die für Folgendes konfiguriert ist:
Empfangen einer Anforderung eines auf einem Client durchzuführenden Vorgangs von einem Application-Service-Provider, ASP, wobei der angeforderte Vorgang ein Geräteverwaltungsvorgang ist, der aus der Gruppe ausgewählt wird, die aus Folgendem besteht: Bereitstellen einer Anwendung, Aktualisieren einer Anwendung, Deinstallieren einer Anwendung, Bereitstellen eines Sicherheitspatch auf dem Client;
Bestimmen, ob der angeforderte Vorgang nicht vorab bewilligt wurde und daher eine Benutzerbewilligung erfordert; und
eine Einschränkungsgenerierungs-Engine (110), die, wenn der angeforderte Vorgang eine Benutzerbewilligung erfordert und nicht vorab bewilligt wurde, für Folgendes konfiguriert ist:
Generieren einer Benutzereinschränkung, die ein Benutzerbewilligungsverfahren enthält, wobei die Benutzereinschränkung dem Client signalisiert, dass ein Benutzer den angeforderten Vorgang vor dem Laufenlassen des angeforderten Vorgangs auf dem Client zu bewilligen oder abzulehnen hat;
wobei die Trusted Authority ferner für Folgendes konfiguriert ist:
Generieren eines erweiterten Berechtigungstokens, das die Benutzereinschränkung, die das Benutzerbewilligungsverfahren enthält, umfasst, wobei das Benutzerbewilligungsverfahren den Client zum Einholen einer Benutzerbewilligung, bevor der angeforderte Vorgang auf dem Client ausgeführt werden darf, auffordert; und
Übertragen des erweiterten Berechtigungstokens an den Client;
wobei der Client für Folgendes konfiguriert ist:
Anzeigen des Benutzerbewilligungsverfahrens;
Empfangen einer Benutzerantwort auf das Benutzerbewilligungsverfahren; und
Laufenlassen des angeforderten Vorgangs auf dem Client, entweder wenn die empfangene Benutzerantwort eine Bewilligung des angeforderten Vorgangs angibt oder wenn der angeforderte Vorgang vorab bewilligt wurde.

13. Vorrichtung nach Anspruch 12, wobei der Server ferner Folgendes umfasst:
ein Client-to-Application-Mapping (112), das konfiguriert ist, um eine Vielzahl von auf dem Client installierten Anwendungen, die Anzahl der Benutzerbewilligungen eines Vorgangs von einem bestimmten Typ und eine Dauer seit der letzten Benutzerbewilligung eines bestimmten Vorgangs zu speichern.

14. Vorrichtung nach Anspruch 12, wobei die Einschränkungsgenerierungs-Engine ferner, wenn der angeforderte Vorgang nicht vorab bewilligt wurde, für Folgendes konfiguriert ist:
Erweitern des Berechtigungstokens durch Anhängen einer angepassten Nachricht an das Berechtigungstoken, wobei die angepasste Nachricht zusätzliche Informationen liefert, die vom Benutzer genutzt werden, um zu bestimmen, ob der angeforderte Vorgang über das Benutzerbewilligungsverfahren anzunehmen oder abzulehnen ist.

15. Vorrichtung nach Anspruch 12, wobei das Benutzerbewilligungsverfahren konfigurierbar ist und wobei eine Konfiguration des Benutzerbewilligungsverfahrens aus der Gruppe ausgewählt wird, die aus Folgendem besteht: Anfordern biometrischer Daten vom Benutzer, Anfordern eines Benutzerpassworts, Anzeigen einer Benutzernachricht mit den Optionen 'Annehmen' und 'Ablehnen' zur Benutzerauswahl und einem Zwei-Faktor-Authentifizierungsverfahren.

## Revendications

1. Procédé de gestion d'opérations sur un client (116) par un gestionnaire d'activation (102) sur un serveur dorsal, le procédé comprenant :
la réception (302), par le gestionnaire d'activation, d'une demande émise par un fournisseur de services d'application, ASP, (102) d'exécution d'une opération sur le client, l'opération demandée étant une opération de gestion de dispositif sélectionnée dans un groupe consistant en : le déploiement d'une application, la personnalisation/configuration d'une application, l'actualisation d'une application, la désinstallation d'une application, et le déploiement d'un correctif de sécurité sur le client ;
la détermination (304), par le gestionnaire d'activation, que l'opération demandée n'est pas ou est pré-approuvée et exige donc ou non une approbation par l'utilisateur ;
quand il est déterminé que l'opération demandée n'est pas pré-approuvée et exige donc une approbation par l'utilisateur :
la génération (314), par le gestionnaire d'activation, d'un jeton d'autorisation étendu (200) comprenant une contrainte d'utilisateur (210) qui comporte un procédé d'approbation par l'utilisateur (224), la contrainte d'utilisateur signalant au client que le procédé d'approbation par l'utilisateur est exigé avant que l'opération demandée puisse être exécutée sur le client ;
la transmission (316) du jeton d'autorisation étendu par le gestionnaire d'activation au client ;
l'affichage, par le client, du procédé d'approbation par l'utilisateur ;
la réception, par le client, d'une réponse d'utilisateur au procédé d'approbation par l'utilisateur ; et
l'exécution, par le client, de l'opération demandée sur le client, soit quand la réponse d'utilisateur reçue indique l'approbation de l'opération demandée, soit quand l'opération demandée est pré-approuvée.

2. Procédé selon la revendication 1, dans lequel la génération du jeton d'autorisation étendu comprend en outre :
l'ajout d'un message personnalisé au jeton d'autorisation étendu, le message personnalisé fournissant des informations supplémentaires utilisées par l'utilisateur pour déterminer qu'il convient d'accepter ou de rejeter l'opération demandée par l'intermédiaire du procédé d'approbation par l'utilisateur.

3. Procédé selon la revendication 2, dans lequel les informations supplémentaires comprennent au moins une information sélectionnée dans le groupe consistant en : le nom de l'ASP demandant l'opération et une application cible de l'opération.

4. Procédé selon la revendication 1, dans lequel le jeton d'autorisation étendu comprend une signature numérique cryptée.

5. Procédé selon la revendication 1, dans lequel le procédé d'approbation par l'utilisateur est configurable.

6. Procédé selon la revendication 5, dans lequel la configuration du procédé d'approbation par l'utilisateur comprend au moins une configuration sélectionnée dans le groupe consistant en : la demande de données biométriques à l'utilisateur, la demande d'un mot de passe d'utilisateur, l'affichage d'un message d'utilisateur présentant des options 'accepter' et 'rejeter' pour la sélection d'utilisateur, et un procédé d'authentification à deux facteurs.

7. Procédé selon la revendication 1, dans lequel une opération est pré-approuvée quand l'opération est mandatée par l'ASP, l'opération a été précédemment approuvée par l'utilisateur, et/ou l'opération est essentielle pour la sécurité du client.

8. Procédé selon la revendication 1, comprenant en outre :
l'affichage, sur le client, du procédé d'approbation par l'utilisateur invitant l'utilisateur à accepter ou à rejeter une demande d'exécution de l'opération demandée sur le client avant que l'opération demandée soit exécutée sur le client.

9. Procédé selon la revendication 8, dans lequel l'opération demandée est exécutée sur une application cible sur le client, et dans lequel l'application cible est exécutée dans un environnement d'exécution sécurisé, TEE, sur le client.

10. Procédé selon la revendication 9, dans lequel le TEE reçoit le jeton d'autorisation étendu et décrypte une signature numérique cryptée.

11. Procédé selon la revendication 8, dans lequel l'affichage du procédé d'approbation par l'utilisateur comprend en outre :
l'affichage d'un message personnalisé comportant des informations supplémentaires utilisées par l'utilisateur pour déterminer qu'il convient d'accepter ou de rejeter l'opération demandée par l'intermédiaire du procédé d'approbation par l'utilisateur.

12. Appareil comprenant un serveur et un client, le serveur comprenant :
une autorité de confiance (108) configurée pour :
recevoir une demande d'exécution d'une opération sur un client depuis un fournisseur de services d'application, ASP, l'opération demandée étant une opération de gestion de dispositif sélectionnée dans le groupe consistant en : le déploiement d'une application, la personnalisation/configuration d'une application, l'actualisation d'une application, la désinstallation d'une application, le déploiement d'un correctif de sécurité sur le client ;
déterminer que l'opération demandée n'est pas ou est pré-approuvée et exige donc ou non une approbation par l'utilisateur ; et
un moteur de génération de contrainte (110) configuré pour, quand l'opération demandée exige une approbation par l'utilisateur et n'est pas pré-approuvée :
générer une contrainte d'utilisateur qui comporte un procédé d'approbation par l'utilisateur, la contrainte d'utilisateur signalant au client qu'un utilisateur doit approuver ou rejeter l'opération demandée avant l'exécution de l'opération demandée sur le client ;
l'autorité de confiance étant configurée en outre pour :
générer un jeton d'autorisation étendu comprenant la contrainte d'utilisateur qui comporte le procédé d'approbation par l'utilisateur, dans lequel le procédé d'approbation par l'utilisateur invite le client à demander l'approbation de l'utilisateur avant que l'opération demandée puisse être réalisée sur le client ; et
transmettre le jeton d'autorisation étendu au client ;
le client étant configuré pour :
afficher le procédé d'approbation par l'utilisateur ;
recevoir une réponse d'utilisateur au procédé d'approbation par l'utilisateur ; et
exécuter l'opération demandée sur le client, soit quand la réponse d'utilisateur reçue indique l'approbation de l'opération demandée, soit quand l'opération demandée est pré-approuvée.

13. Appareil selon 12, dans lequel le serveur comprend en outre :
une mise en correspondance client-application (112) configurée pour mémoriser une pluralité d'applications installées sur le client, un nombre de fois que l'utilisateur a approuvé un type particulier d'opération, et une durée depuis la dernière approbation par l'utilisateur d'une opération particulière.

14. Appareil selon la revendication 12, le moteur de génération de contraintes étant configuré en outre pour, quand l'opération demandée n'est pas pré-approuvée :
étendre le jeton d'autorisation en ajoutant un message personnalisé au jeton d'autorisation, le message personnalisé fournissant des informations supplémentaires utilisées par l'utilisateur pour déterminer qu'il convient d'accepter ou de rejeter l'opération demandée par l'intermédiaire du procédé d'approbation par l'utilisateur.

15. Appareil selon la revendication 12, dans lequel le procédé d'approbation par l'utilisateur est configurable, et dans lequel une configuration du procédé d'approbation par l'utilisateur est une configuration sélectionnée dans le groupe consistant en : la demande de données biométriques à l'utilisateur, la demande d'un mot de passe d'utilisateur, l'affichage d'un message d'utilisateur présentant des options 'accepter' et 'rejeter' pour la sélection d'utilisateur, et un procédé d'authentification à deux facteurs.
